(19) Europäisches Patentamt
European Patent Office
Office européen des brevets

(11) **EP 2 192 503 A1**

(12) **EUROPEAN PATENT APPLICATION**

(43) Date of publication:
**02.06.2010 Bulletin 2010/22**

(51) Int Cl.:
***G06F 17/30*** *(2006.01)*

(21) Application number: **08253792.9**

(22) Date of filing: **21.11.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventor: **The designation of the inventor has not yet been filed** |
| | (74) Representative: **Lau, Chi-Fai**<br>**BT Group Legal**<br>**Intellectual Property Department**<br>**PP C5A, BT Centre**<br>**81 Newgate Street**<br>**London**<br>**EC1A 7AJ (GB)** |
| (71) Applicant: **BRITISH TELECOMMUNICATIONS public limited company**<br>**London**<br>**EC1A 7AJ (GB)** | |

(54) **Optimised tag based searching**

(57) The invention relates to a method and apparatus for optimising the searching of tagged files, and in particular a method and apparatus for optimising the searching of files tagged by a community of users where the inter-relationships between tagged files and the specific user tagging the files within a group are taken into account in the optimisation. A store of files, tagged with various keywords, is searched using a query term provided by a user. The search results are ranked using a weighted tag network based on co-authorship of tags with weighted inter-dependencies based on degree of associations between keywords. The weighted tag network is generated based on tags created by users of a common group or community, and hence the resulting ranking of search results reflects the user group. Furthermore, the query term used for searching can also be expanded using the tag network to give additional potentially useful terms for searching the files with.

Figure 10

**EP 2 192 503 A1**

**Description**

**Field of the Invention**

This invention relates to a method and apparatus for optimising the searching of tagged files, and in particular a method and apparatus for optimising the searching of files tagged by a community of users where the inter-relationships between tagged files and the specific user tagging the files within a group are taken into account in the optimisation.

**Background to the Invention**

Search engines are commonly used today to search through the data stored both locally, say on user's PC, as well as the vast quantities of data available on the Internet. In order to perform a typical search, a search engine will build a corpus of information, based upon documents that have been retrieved. The retrieved documents are then indexed using keywords that have been extracted from the contents of those documents. Later, when a query or search is performed, the keywords used for the search are compared to those used to index the previously retrieved documents, with documents returned that provide the best keyword match. The returned documents can also be ranked based on their relevance, which is usually based upon the degree or amount of keyword matching as well as measures based upon the "quality" of the page, for example Google's PageRank metric.

It is known to "tag" web pages and files in general, which involves assigning keywords (tags) to that web page. The tag is a form of metadata, and can be assigned by users themselves, and sometimes added to existing documents at some stage after their initial creation. Indeed, a body of tagged information can be searched using the tags themselves, rather than other implicit features located with the content. This allows searches to be made in the vocabulary and terms that have been used by the users to tag the content. However, this method has a limitation that the search terms (queries) need to match the terms used in the tags: items tagged with a particular query are matched and retrieved.

"Tag-Based Metonymic Search in an Activity-Centric Aggregation Service" by M.J. Muller et al, from "ECSCW'07: Proceedings of the Tenth Conference on Computer Supported Cooperative Work, 24-28 September 2007, Limerick, Ireland, describes a method of searching a body of tagged information by using the tags themselves rather than other implicit features of the content. This allows searches to be made in the vocabulary of the users given that the tags tend to be user generated. However, this method is limited as the search terms need to match the terms used in the tags, as item tagged with a particular query are matched and retrieved.

Other systems utilise a classifier to extract words and phrases from tagged web pages, and then learn sets of keywords that are intended to represent the semantic meaning of the tags, so that a vocabulary associated with a tagged page is expanded. Other methods are known which utilise a wiki to semi-automatically define a vocabulary to expand on the tags used for searching.

These methods effectively provide for query expansion which expand and augment the search query by querying for other words associated with the original phrase. A number of mechanisms exist to perform query expansion including by use of a thesaurus such as WordNet.

"Web Search Disambiguation by Collaborative Tagging" by C. M. Au Yeung et al, from "Workshop on Exploring Semantic Annotations in Information Retrieval" at ECIR'08, 30 March 2008, Glasgow, UK, describes a method of disambiguating a document's contents by determining which cluster a document is most related to. The method uses the relationships between character strings used for annotation.

**Summary of the Invention**

It is the aim of embodiments of the present invention to address one or more of the above-stated problems, and to provide an improved method of ranking search results from searches of files that takes into account relationships between keywords used for tagging as well which user has created those tags.

According to one aspect of the present invention, there is provided a method of searching a plurality of files, wherein each of a plurality of users tags at least one of the plurality of files with one or more keywords and wherein the users belong to the same user group, said method comprising:

   building a tag network, wherein the tag network comprises keywords and links connecting the keywords, and wherein the links represent a weighted relationship between the keywords;
   receiving a query term from a user of the user group;
   performing a search on the plurality of files using the query term to determine a plurality of matching files;
   ranking the plurality of matching files in dependence on a cumulative score for each of the matching files, said cumulative score comprising weightings derived from the weighted relationships in the tag network corresponding to the keywords found in the matching files.

The tag network can be used to expand the received query term to a set of expanded keywords comprising a plurality of keywords from the tag network a predetermined number of hops away from the query term, and the using the set of expanded keywords for performing the search to determine a plurality of matching files.

Preferably, the links between the keywords in the tag network are present for keywords that are used for tagging by the same author, and wherein the weighted relationship of those links are dependent on a similarity measure between the keywords.

The similarity measure may be based on the degree of association between different keywords, where keywords used to tag a common file have a high degree of association.

According to a second aspect of the invention, there is provided a server for searching a plurality of files, wherein each of a plurality of users has tagged at least one of the plurality of files with one or more keywords and wherein the users belong to the same user group, said server comprising a processor adapted to:

build a tag network, wherein the tag network comprises keywords and links connecting the keywords, and wherein the links represent a weighted relationship between the keywords; and to

receive a query term from a user of the user group, perform a search on the plurality of files using the query term to determine a plurality of matching files; and rank the plurality of matching files in dependence on a cumulative score for each of the matching files, said cumulative score comprising weightings derived from the weighted relationships in the tag network corresponding to the keywords found in the matching files.

Examples of the invention aim to exploit both the documents' contents as well as the additional tags that have been added by users, to generate a community-based network of related terms. Through the use of this network, the search engine is improved in two ways: local synonyms and jargon are identified as important; and, the results of a search are ranked based upon the community's interests. This is done by the application of keyword expansion based tag relationships from co-located tags used on files, and from tags being created by 'similar' users with a community.

Searches are therefore advantageously adapted to the vocabulary and keywords used by a particular community by either expanding the keywords used in the search based on the tag link weightings network, and/or ranking the search results according to the weightings network.

**Brief Description of the Drawings**

For a better understanding of the present invention reference will now be made by way of example only to the accompanying drawings, in which:

Figure 1 is a network diagram showing local computers connected to file servers over a network;
Figure 2 is an arrangement of users and tagged files;
Figure 3 is a simple network connection diagram of tagged files and users;
Figure 4 is a connection diagram of used tags and their basic inter-relationships;
Figure 5 is a connection diagram of used tags and their inter-relationships including similarity coefficients;
Figure 6 is a connection diagram of used tags and their inter-relationships based on the user who created the tag;
Figure 7 is a connection diagram of used tags and their inter-relationships with link weights based on the user who created the tag and also the calculated similarity coefficient;
Figure 8 is a connection diagram with further expanded tag link weightings;
Figure 9 is a connection diagram with tags within a certain number of hops from a query term highlighted;
Figure 10 is a flow chart summarising the various steps in examples of the present invention for building the weighted networks, and their subsequent use for optimising searches.

**Description of Preferred Embodiments**

The present invention is described herein with reference to particular examples. The invention is not, however, limited to such examples.

The present invention may be embodied in hardware, software or a combination of hardware and software. This invention relates to a method and apparatus for optimising the searching of tagged files, and in particular a method and apparatus for optimising the searching of files tagged by a community of users where the inter-relationships between tagged files and the specific user tagging the files within a group are taken into account in the optimisation. A store of files, tagged with various keywords, can be searched using a query term provided by a user. The search results can be ranked using a weighted tag network based on co-authorship of tags with weighted inter-dependencies based on degree of associations between keywords. The weighted tag network is generated based on tags created by users of a common group or community, and hence the resulting ranking of search results reflects the user group. Furthermore, the query term used for searching can also be expanded using the tag network to give additional potentially useful terms for searching the files with.

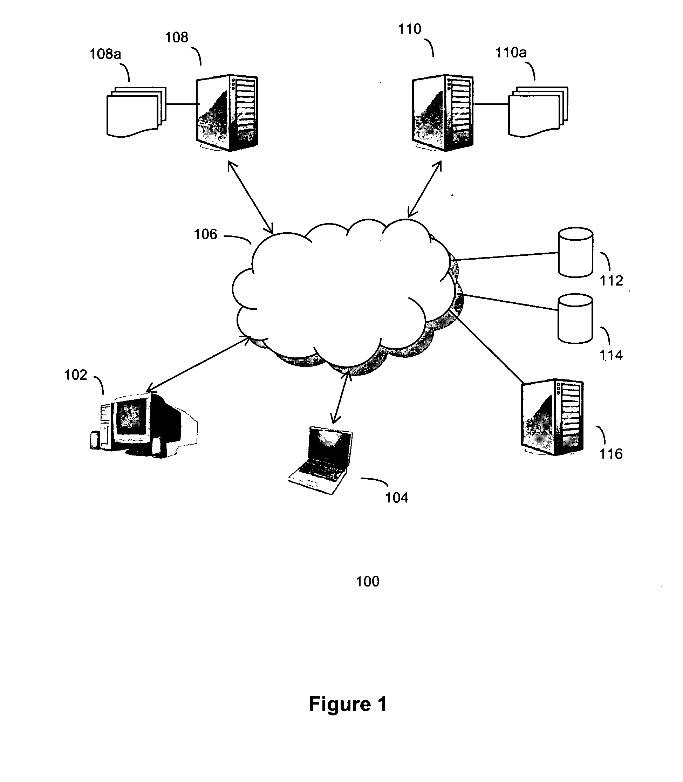

Figure 1 shows a system 100 comprising a computer 102 and a laptop 104 connected to a network 106, which may be for example a local network or the Internet. Connected to the network 106 are servers 108 and 110. The servers 108 and 110 have files, 108a and 110a respectively, stored on them such as web pages, documents, images, video, and other data files in general, which may be accessed by other devices in the system such as the PC 102 and laptop 104. The files 108a and 110a are stored at the associated servers on storage such as a hard disk, optical disk, flash drive or similar. The PC 102 and laptop 104 can also store files locally that are accessible to any user to the system. For example, a user can utilise the PC 102 or laptop 104 to access the files 108a and 110a stored remotely on the servers 108 and 110, or files stored locally on the PC 102 itself.

System 100 also includes two further data stores 112 and 114, which can each comprise a hard disk, flash drive, magnetic media or similar, connected to the network 106. These data stores 112 and 114 are used to store index tables used for tagging and searching purposes. The server 116 connected to the network 106 provides search functions to connected devices such as the PC 102 and laptop 104. The server 116 can access the data stores 112 and 114 to assist with providing searching functionality, and the operation of those elements will be described below. It should be noted that whilst the data stores 112 and 114, and the server 116 have been shown as separate entities, they could be located in the same physical server or at least have direct connections.

Exemplary embodiments of the invention are realised, at least in part, by executable computer program code which may be embodied in the application program data stored locally on one or more of the devices in the system 100, such as server 116 and/or PC 102. When such computer program code is loaded into the memory of the associated device for execution, it provides, in conjunction with an executing processing unit in that device, a computer program code structure which is capable of performing at least part of a method in accordance with the herein below described exemplary embodiments of this invention.

Furthermore, a person skilled in the art will appreciate that the computer program structure referred can correspond to the process flow chart described below, where each step of the flow chart can correspond to at least one line of computer program code and that such, in combination with a processing unit in the corresponding device, such as the server 116, provides apparatus for effecting the described process.

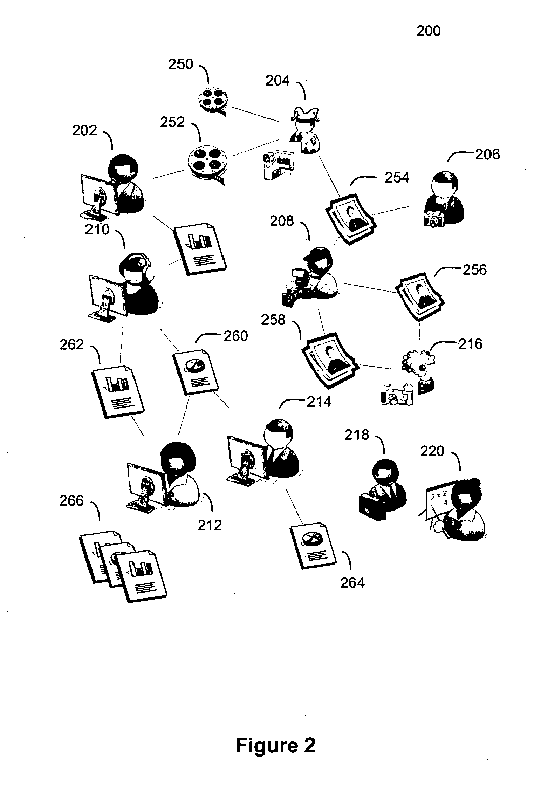

Figure 2 shows a network 200 of users or "taggers" (people who tag) 202, 204, 206, 208, 210, 212, 214, 216, 218, 220 and items or files 250, 252, 254, 256, 258, 260, 262, 264 and 266. Each user shown in this example is part of the same group or community. For example, each user may be part of the same photography club, or work in the same division at a workplace. The network 200 is a simplified version of the system 100 shown in Figure 1, but with the specific hardware of the access terminals/servers. connecting network and data stores omitted for clarity. The files can be stored on PC 102 or remote servers, such as server 108 or 110. The files can all be tagged by users accessing the files. The files may be for example video files (250 and 252), photos (254, 256 and 258) or documents (260, 262, 264 and 268).

Each user may tag zero or more files. A user may tag a file with whatever term he considers to be appropriate and may also tag files that have already been tagged by other users. For example, photo 258 is tagged by both user 208 and user 216. On the other hand, users 218 and 220 have not tagged any files, and also document file 266 remains untagged. It should be noted that other files may be stored in the system that have not been shown (again for clarity), which may, together with the files shown, be indexed, searched and retrieved. The links in Figure 2 between the users and files represent that a particular user has added a tag (annotation) to that file. To illustrate, user 202 may tag the video file 252, with the tag "holiday" and "beach" as the video clip was taken on a holiday on the beach.

The tags used are preferably stored in the data store 112, which can compile a table referencing each file in the system together with any associated tags. Data store 112 may also record which user made use of which tag. Thus, the data store 112 would have a table indexed with URIs or URLs of each file, followed by tags e.g. URI of file 1: tag 1, tag 1, tag 3. The table in the data store 112 thus provides a quick reference to all the files together with the associated tags in a single place.

As more files are tagged, a community consensus emerges to the set of terms that are being used, and a common consensus to the items tagged with a particular set of words. The aggregated set of tags tends to converge, with a common set of keywords describing a file, and hence a community understanding (as the tags are created by users of a single community). The tags associated with a file may be stored as metadata associated with the file.

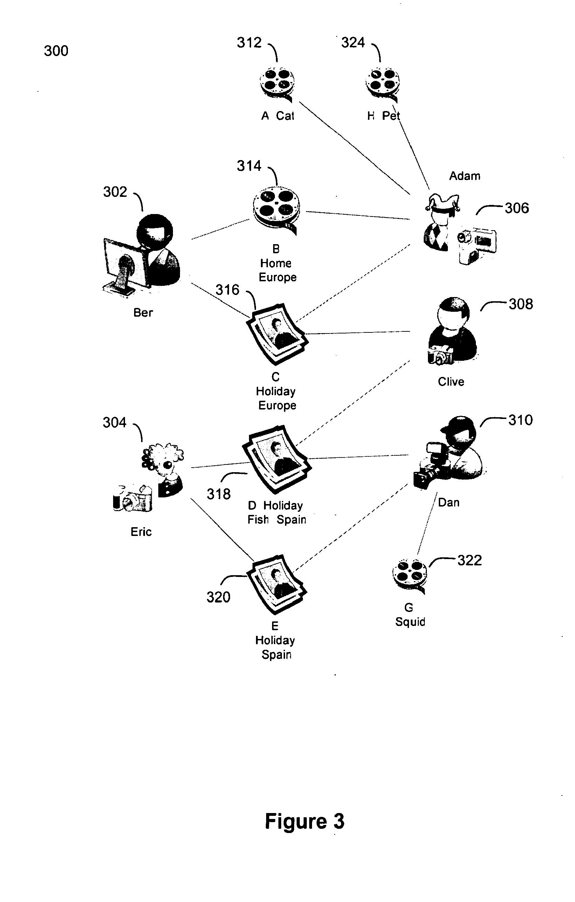

Consider now the example shown in the network 300 in Figure 3, which shows five users Ben 302, Eric 304, Adam 306, Clive 308 and Dan 310, all belonging to the same group. Each user has tagged the files 314, 316, 318, 320, 322 and 324. For example, file A 312 is a video file and has been tagged with the term "Cat" by user Adam 306. File H 324 is also a video file and has also been tagged by Adam 306 with the term "Pet". File B 314 is a video file and has been tagged by both Ben 302 and Adam 306 with the terms "Home" and "Europe". File C is a photo and has been tagged by Ben 302 and Clive 308 with the terms "Holiday" and "Europe". File D is a photo and has been tagged by Eric 304, Clive 308 and Dan 310 with the terms "Holiday", "Fish" and "Spain". File E 320 is a photo and has been tagged by Eric 304 and Dan 310 with the terms "Holiday" and "Spain". And finally, file G 322 is a video file and has been tagged by Dan 310 with the term "Squid".

A number of different similarity measures can be used to calculate the associations between the different keywords. To exemplify, one such measure is the Dice similarity measure, which provides a metric representing the degree of association between different keywords. The Dice similarity measure between two keywords "A" and "B" is given by equation (1) below:

$$\text{Dice (A, B)} = \frac{2\left(|A \cap B|\right)}{\left(|A| + |B|\right)} \qquad (1)$$

Where $|A|$ is the number of files tagged with the word "A", and $|A \cap B|$ is the number of files tagged with both "A" and "B". A Dice value of 1 denotes matching words, and a value of 0 denotes no match/similarity at all.

For example, referring to the example shown in Figure 3, the following similarity values can be calculated:

Dice ("Holiday", "Spain") = (2 * 2) / (3 + 2) = 4 / 5 = 0.8
Dice ("Holiday", "Europe") = (2 * 1) / (3 + 2) = 2 / 5 = 0.4
Dice ("Cat", "Europe" ) = (2 * 0) / (1 + 2) = 0

Thus, the terms "Holiday" and "Spain" are, according to the Dice metric, relatively similar (as they can both be found tagging 2 files, photo D 218 and photo E 320). Conversely, the terms "Cat" and "Europe" return a Dice value of 0, which denotes no similarity (as they are not ever used to tag the same file, only separate files, video file A 312 and video file H 324).

A network of similarity measures is built for all tags by the server 116 by inspecting the tag data store 112 and applying the Dice method above. The similarity measure can be store locally by the server 116 at an associated data store, such as data store 114.

In a preferred example of the invention, the similarity measure is calculated for all files, based upon the tags made by users within a specified community. Thus, a user tagging a file is assigned a community or group, and a network of similarity measures is calculated for each group. As will be seen later, a subsequent user wishing to search the tagged files, can have their search optimised based on similarity measures or weightings from that user's group or community. The set of similarity values built from tagging by a specific group of users produces a community thesaurus of words that are given similarity weightings with other words, and thus can be used to provide alternative words to use in file searches.

Since the community thesaurus is generated from the available data, this thesaurus is better than a standard thesaurus as it is able to adapt to community-specific terms and terms are weighted closer to their importance to the community.

Taking the above example, the tag "Holiday" would become strongly associated with "Spain" (Dice measure of 0.8), and have a weaker association with "Europe" (Dice measure of 0.4). These similarity values can be updated periodically by the server 116 to reflect any changes to the tags applied by users and the values updated in the data store 114.

When performing a standard search, a user inputs a query term or word with which to perform a search. Files containing the query term, such as a text document, or any other files such as photos with a matching word used as a tag, will be returned as a match. When utilising the above described similarity network in an example of the present invention, files indirectly related could be returned as well. Thus, if the word of "Holiday" is used in a standard search in Figure 3, the result would only show files C 316, D 318, and E 320, each of which has the tag "Holiday". However, using the similarity network in an example of the present invention, "Holiday" and "Europe" are somewhat similar (Dice value of 0.4), and so the term "Europe" might also be used in the search as an alternative search term. Thus, file B 314 might also be returned if the similarity network is utilised this way to expand the original search term "Holiday" to include both "Holiday" and "Europe".

The network of Dice coefficients can also be expanded to take into account authorship of tags i.e. the user who created the tag, and thus create relationships between files tagged by the same user. The method for adapting the network of coefficients and further refinements in a preferred example of the present invention will be described below.

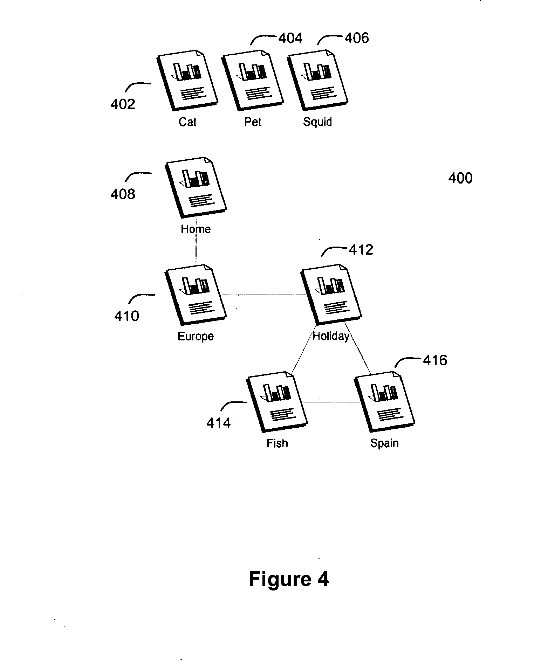

Figure 4 shows a connection diagram 400 showing the different tags used in Figure 3, where co-located tags (in a given file) are linked. Thus, the tags "Cat" 402, "Pet" 404 and "Squid" 406 are unconnected as they are each only used to tag separate files - file A 312, file H 324 and file G 322 respectively. However, the tag "Home" 408 is connected to the tag "Europe" 410 as both are used in file B 314; tag "Europe" 410 is further connected to the tag "Holiday" 412 as both are used in file C 316; tag "Holiday" 412 is connected to the tag "Fish" 414 as both are used in file D 318, and also connected to tag "Spain" 416 as both are used in file E 320; and finally tag "Fish" 414 and "Spain" 416 are also connected as both are used in file D 318.

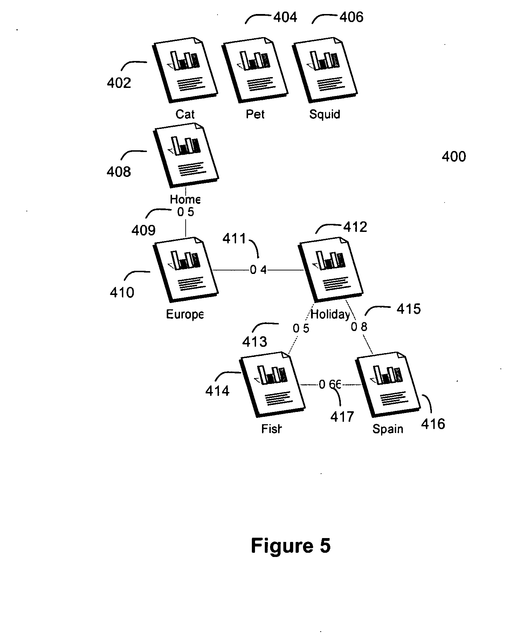

Figure 5 shows the same connection diagram 400 as Figure 4, but includes the Dice coefficients calculated according to equation (1) and as described above.

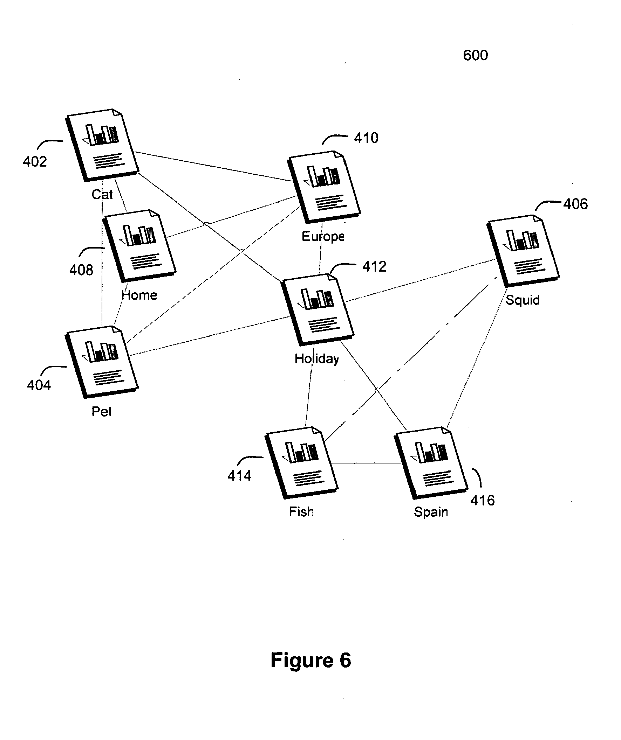

Figure 6 shows a network 600 with the same tags as Figures 4 and 5, but having different links in a further example of the invention. The links shown in network 600 indicate tags made by the same author or user. Hence the tag "Cat", which in earlier connection networks was not connected to any other tag given it featured in a single file A 312 having no other tags, is now connected to each of the "Pet" 404, "Home" 408, "Europe" 410 and "Holiday" tags in network 600. This is because the user Adam 306 (see Figure 3) created each of the tags "Cat", "Pet", "Home", "Europe" and "Holiday" for use in the files A 312, B 314, C 316 and H 324.

In this example of the invention, a network of co-located tags is built up taking into account the notion of tag authorship. Weightings that denote the similarity between one keyword and another is based upon those factors listed.

By assigning each of the links in network 600 a weight, we can build a similar network to the Dice coefficients described earlier. For example, each link in network 600 can be assigned a link weight of 0.1, which can then be added to the Dice coefficient weighting. Thus each link weight taking into consideration authorship and Dice coefficient can be represented by equation (2) below:

$$\text{LinkWeight(A, B)} = 0.1 + \frac{2\big(|A \cap B|\big)}{\big(|A| + |B|\big)} \tag{2}$$

It should be appreciated that equation (2) is an example function, where the weighting given to authorship is set to a value of "0.1 ". A person skilled in the art will appreciate that variations to this function are possible.

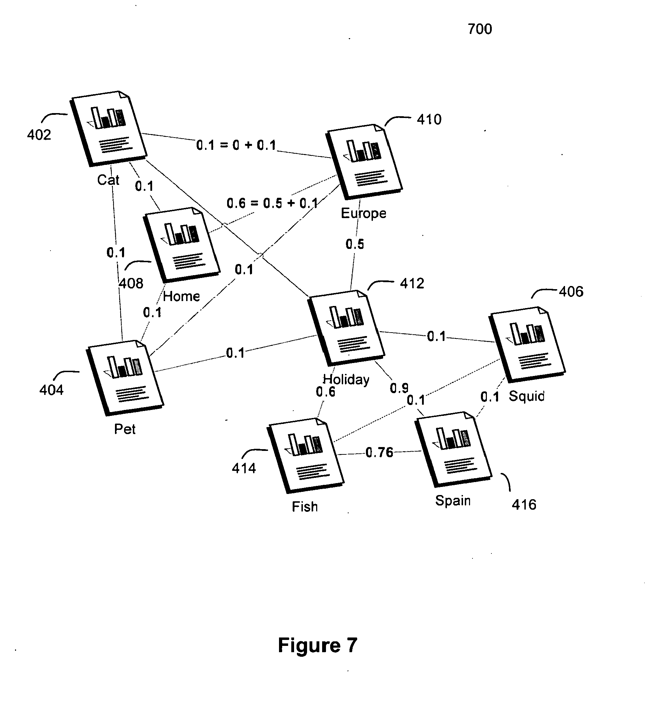

Figure 7 shows a network 700 of the tags including the adjusted link weights according to equation (2).

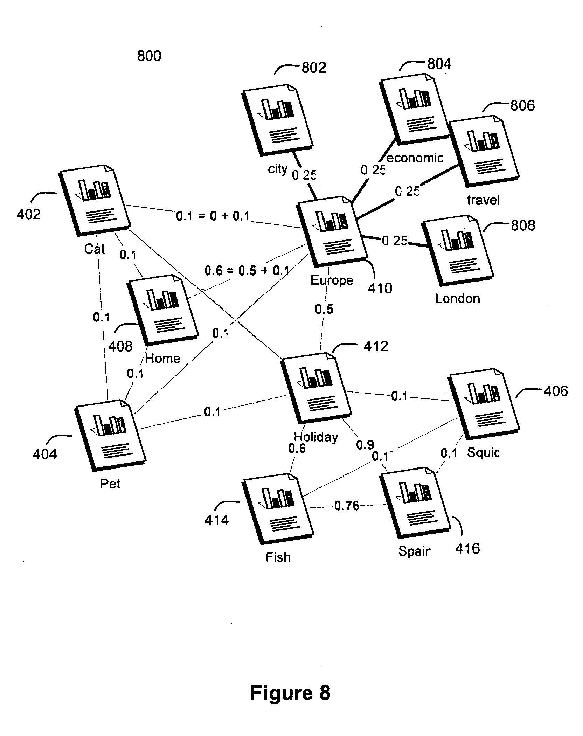

In a further example of the present invention, the weightings of the links in the network 700 in Figure 7 can be further augmented by adding in the any learnt associated phrases (if that has been possible). For example, user Ben 302 may have tagged a number of other files (not shown), and the system then builds an additional vector of keywords for "Europe" as {"city", "economic", "London", "travel"}. It is important to note that these associations may not match strict, dictionary definitions, rather these definitions are words, phrases and associations that are valid for this particular set of users, in this community. This is shown in Figure 8, where a simple weighting of 1/n is applied to the new links, where n is the number of added keywords. In "Knowledge Sharing on the Semantic Web", 2007 by Kings, N. J. Gale, C. & Davies, J (2007) published in "European Semantic Web Conference (ESWC) 2007" by Franconi, E., Kifer, M. & May, W. (Eds.), LNCS 4519 ed. Innsbruck, Springer-Verlag, it is shown how it is possible to "learn" associations between tags and extracted keywords.

As can be seen, the network 800 shown in Figure 8 now includes additional weighted links between the tag "Europe" 410 and each of the new tags "city" 802, "economic" 804, "travel" 806 and "London" 808. The links from the tag "Europe" 410 to each of the new tags are assigned an initial weighting of 0.25 (1/n, where n=added keywords=4). A person skilled in the art will appreciate that the network can be further expanded by adding the connections and weightings between learnt keywords, for example, by adding a network of items tagged with the derived keyword of "London" and so forth.

The networks showing the tag link weightings can be determined locally by each computer used to access the shared files, such as the PC 102 or laptop 104, but it is preferable to have the search server 116 perform the calculations centrally. It should be stressed that the weighted tag networks shown in Figure 7 and Figure 8 are built for a community or group of users, so that only tags made by users in a common group are used to build a weighted tag network for that group.

Before a user even performs a search, a central server 116 (or even one of server 108 or 110) builds up an index of all the files based on keywords from tags and contents of those files to allow for faster searching. When a user performs a search, a request is made to the central server 116 together with one or more query words for the search, which are matched up against the keywords in the index taken from the tags or contents of the files. A typical search would use this basic method of keyword matching and return any files having matching keywords.

In preferred examples of the invention, the networks described above can be used to optimise the search as follows.

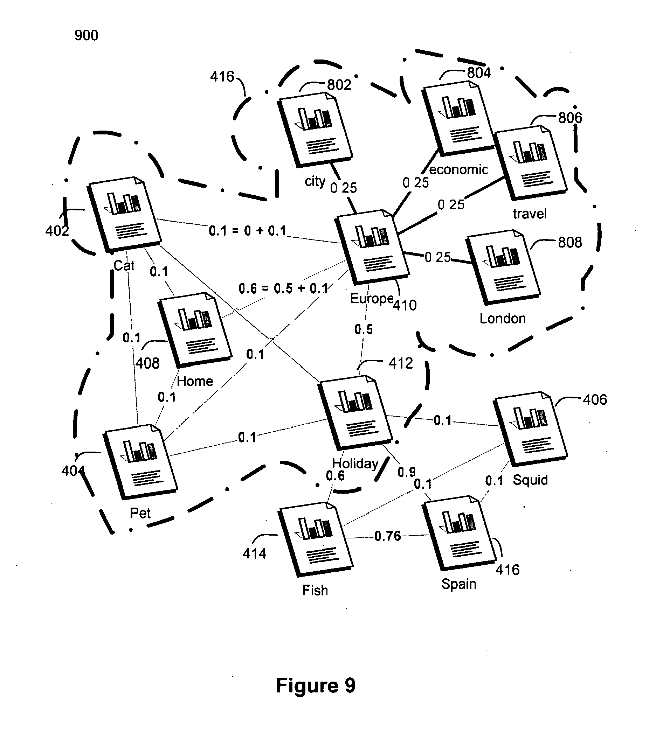

In a first optimised method of search, a search query provided by a user belonging to a certain group is expanded using one of the weighting networks associated with that group. For example, one of network 700 or 800 which includes tag similarity relationships as well as tag authorship relationships can be used, where the network corresponds to the group to which the user requesting the search belongs. So, when a user inputs a query term for a search, the query term can be expanded out to include other terms based on the tag relationships a number of hops away in the network. To illustrate, reference is made to the network 900 of tag links and their weightings shown in Figure 9, which is the same as the network 800 in Figure 8, but includes a boundary marked to show those tags within two hops of the term "London" 808. So, in this example, the query term input into the search is "London", but the network 900 is used to find all the terms two hops away from the tag "London". Thus the query term "London" is expanded into the set {"London", "travel", "economic", "city", "holiday", "home", "cat", "pet"}. Whilst the keywords "cat" and "pet" may not be directly relevant to the desired query, their effect can be filtered out later by ranking the results using the network weightings as described below. Whilst a hope count of two has been chosen here, any hope count number can be chosen, with the effect that a larger hope count will generally increase the number alternative keywords found.

The effect of this query term expansion using the tag network enables search terms based on other keywords that have been used for tagging related items and used by other users in the same group. Thus a broader, and potentially more relevant vocabulary can be used for the actual search that reflects the opinion of other users in the same group.

Once the expanded set is determined, the keywords in that set can be used in a standard search using the indexes described above for example. Thus, files having the term "travel", "economic", or "city" and so on, would be included in the returned search results. Thus, this optimised method is based on query term expansion to find keywords to use in a search using one of the tag link networks for a given group.

The second optimised method of search can be used in conjunction with the first optimised method described above or used following a standard keyword search.

The second optimised method ranks the returned search results using the weightings from the tag link network. A weighting for each of the keywords in the network is derived based upon the path taken from the main query term provided by the user, again within a set number of hops from the main query term. The original query term is weighted as 1; keywords one step away are weighted by their network link weight as described earlier; and keywords further out are a product of the weights along that network path from the main query term.

For example, the query term used above of "London" would give the following set of keywords and "adjusted" weights that can be used for ranking the search results:

{ ("London",1), ("Europe", 0.25 * 1). ("travel", 0.25 * 0.25 * 1), ("economic", 0.25 * 0.25 * 1), ("city", 0.25 * 0.25 * 1), ("holiday", 0.5 * 0.25 * 1), ("home", 0.6 * 0.25 * 1), ("cat", 0.1 * 0.25 * 1), ("pet", 0.1 * 0.25 * 1) }

or

{("London",1), ("Europe", 0.25 ), ("travel", 0.06), ("economic", 0.06), ("city", 0.06), ("holiday", 0.125), ("home", 0.15), ("cat", 0.025), ("pet", 0.025)}

This would give the most related terms to the query term of "London" as "London", "Europe", "holiday" and "home", with adjusted weights of 1, 0.25, 0.15 and 0.125 respectively.

These adjusted weightings can then be used to rank the search results from a standard search, or a query term expanded search as described in the first method above. So, once the search has returned a series of matching files (any files having at least one matching keyword), each of those files can be assigned a cumulative weighted score based on the adjusted weightings of the keywords found in that file. For example, if the query term is again "London", and the keyword "London" is found in one of the returned files from the search (either in the file itself or any attached metadata or tag), that file would gain a weighting of 1. If the same file also has the keyword of "Europe", then the additional weight as a result of that term would be 0.25, and thus the cumulative weighting would be 1.25 (1 + 0.25) for that file. The files are then ranked with those having higher cumulative weightings first, to prioritise those files which are likely to be most relevant.

Table 1 below illustrates five files having various matching keywords and associated cumulative weightings or scores (calculated from the network and weightings in Figure 8). The rank of those files based on the score is shown in the final column.

Table 1

| File ID | Keywords or tags matched | Score | Cumulative Score | Ranking |
|---------|--------------------------|-------|------------------|---------|
| 1 | "London", "home" | 1+ 0.15 | 1.15 | 1 |
| 2 | "London", "cat" | 1+ 0.025 | 1.025 | 2 |
| 3 | "cat" | 0.025 | 0.025 | 5 |
| 4 | "Europe", "holiday" | 0.25 + 0.125 | 0.375 | 4 |

(continued)

| File ID | Keywords or tags matched | Score | Cumulative Score | Ranking |
|---|---|---|---|---|
| 5 | "Home", "Europe", "pet" | 0.15 + 0.25 + 0.025 | 0.4 | 3 |

In a further refinement, only those files which have a score above a certain threshold cumulative score are shown.

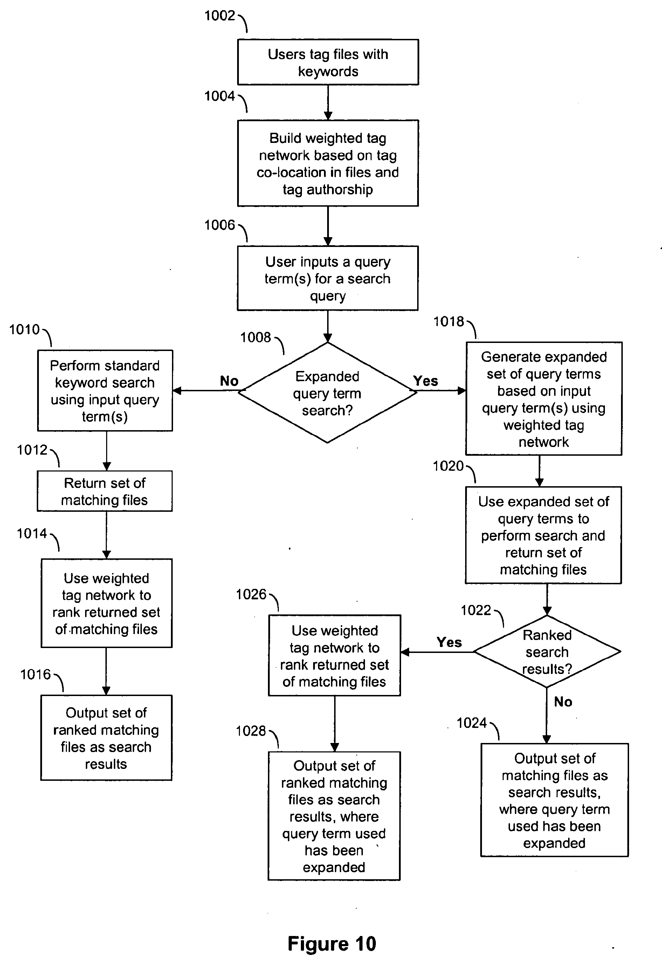

Figure 10 is a flow chart summarising the optimised searching comprising the building of a weighted tag link network for a particular group of users, and then using that weighted network to either a) expand the keywords used for searching, b) rank the search results according to the weighted network, or c) a combination of a) and b).

Thus, the flow starts at step 1002 with users from a given group tagging various files with keywords. The tagging can be done on any files stored in the system 100, using any of the connected devices (such as the PC 102 or laptop 104).

In step 1004, various networks of weighted tag links are built up based on both co-location of tags associated with a given file, and also the authorship of the tags as illustrated in networks 700 and 800 described above. Each of these networks are specific to a group of users, so that a given network represents tagging made by users belonging to a specific group. For example, there might be one network for the group "Accounts department" and a different network for "Photography club". The networks, as described above, can be built centrally by the server 116 and stored in the data store 114.

In step 1006, a user inputs a search query containing a query term or terms to the server 116. The group to which this user belongs is determined, or alternatively the user can select a group by which the search is to be based.

Then in step 1008, a decision is made by the server 116 as to whether an expanded query term search is required, as described in the first optimised method above. The choice as to whether query term expansion is required can be made by the user or set as a default value within the server 116.

Looking at a preferred example first, if query term expansion is required, then processing passes to step 1018 and the weighted tag link network corresponding to the searching user's group, or selected group, is retrieved by the server 116. Using this weighted tag link network, the query term or terms provided by the user can be expanded to include other keywords based on the proximity of the other keywords to the provided query term in the tag link network. So, going back to the example shown in Figure 9, if the query term provided is "London", then the expanded query term set is {"London", "travel", "economic", "city", "holiday", "home", "cat", "pet"}, by virtue of selecting the keywords in the network that are 2 or less hops away from the term "London".

Then in step 1020, this expanded set of query terms is used to perform a search on the files in the system 100. Thus, the search results will include files containing or tagged with any one or more of the terms in the expanded query term set.

In step 1022, a decision as to whether the returned search results should be ranked is made. In this preferred example, the search results are ranked and in accordance with the second optimised method described above. Thus, the weighted tag network returned from step 1018 that is associated with the searching user's group is used to rank the files found in the search in step 1026. This is done using the second optimised method described above with reference to Figure 9 and Table 1, whereby a cumulative weighting for each of the files is calculated based on the combination of each of the adjusted weightings for keywords found in the file using the weighted tag link network. The result is illustrated in Table 1 whereby five files returned from the searching in step 1020 have various matching keywords identified and associated cumulative weightings. The rank of those files based on the cumulative weightings is shown in the final column, and thus the files can be output according to that rank with the highest ranked being presented first.

The set of ranked matching files is output in step 1028.

Thus, steps 1002 through to 1028 describe a method of optimised searching wherein a weighted tag link network is built for a particular group of users, and then using that weighted network to expand the keywords used for searching, and also using the network for ranking the search results.

The above method has been described in relation to the server 116 performing all the processing for the optimised search, but it should be appreciated that one of the other devices connected in the system 100 with access to the tagged files, or more specifically the data store 112 that stores tags and pointers to the location of those files, could be used instead.

An alternative example whereby a standard search is performed without keyword expansion, but with ranking of the search results according to the weighted network is now described. This method is the same as that described above up to and including step 1006. However, in step 1008, wherein the server 116 decides whether to expand the query term search, the decision is now "no" and processing passes to step 1010.

In step 1010, a standard search using keywords is performed using the query term provided by the user in step 1006 by the server 116. The set of matching files resulting from that search is returned in step 1012, which is then used in step 1014, whereby the returned set of files are ranked according to the weighted tag network in the same manner as that described in step 1026 earlier. The ranked files are output in step 1016 by the server 116 to the user.

In a further example, an optimised standard search is performed as set out in steps 1002 to 1020, which include keyword expansion, but when processing reaches step 1022, the server 116 decides to not rank the search results. Processing thus passes to step 1024, where the set of files found in the search using expanded keywords from step 1020 are output without any optimised ranking.

Whilst the above examples utilise the Dice similarity measure, a person skilled in the art will appreciate that other similarity measures could be used instead. Dice has been selected as it is considered to be relatively computationally efficient. However, other measures such as a Cosine similarity, the Jaquart coefficient, or the Latent Semantic Index could be used in the same way.

Furthermore, whilst the above described weighted tag link networks are built based on tagging of files made by multiple users in a community, similar networks can be built on a single user's tagging to give a personalised network instead of a community network with which to expand a search query term and rank search results.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A method of searching a plurality of files, wherein each of a plurality of users tags at least one of the plurality of files with one or more keywords and wherein the users belong to the same user group, said method comprising:

   building a tag network, wherein the tag network comprises keywords and links connecting the keywords, and wherein the links represent a weighted relationship between the keywords;
   receiving a query term from a user of the user group;
   performing a search on the plurality of files using the query term to determine a plurality of matching files;
   ranking the plurality of matching files in dependence on a cumulative score for each of the matching files, said cumulative score comprising weightings derived from the weighted relationships in the tag network corresponding to the keywords found in the matching files.

2. A method according to claim 1, wherein the tag network is used to expand the received query term to a set of expanded keywords comprising a plurality of keywords from the tag network a predetermined number of hops away from the query term, and the using the set of expanded keywords for performing the search to determine a plurality of matching files.

3. A method according to claim 1 or claim 2, wherein the links between the keywords in the tag network are present for keywords that are used for tagging by the same author, and wherein the weighted relationship of those links are dependent on a similarity measure between the keywords.

4. A method according to claim 3, wherein the similarity measure is based on the degree of association between different keywords, where keywords used to tag a common file have a high degree of association.

5. A server for searching a plurality of files, wherein each of a plurality of users has tagged at least one of the plurality of files with one or more keywords and wherein the users belong to the same user group, said server comprising a processor adapted to:

   build a tag network, wherein the tag network comprises keywords and links connecting the keywords, and wherein the links represent a weighted relationship between the keywords; and to
   receive a query term from a user of the user group, perform a search on the plurality of files using the query term to determine a plurality of matching files; and rank the plurality of matching files in dependence on a cumulative score for each of the matching files, said cumulative score comprising weightings derived from the weighted relationships in the tag network corresponding to the keywords found in the matching files.

**Figure 1**

200

250

204

252

202

206

254

210

208

262

256

260

216

258

214

266

212

218

220

264

**Figure 2**

300

312

324

A Cat

H Pet

314

Adam

302

306

B
Home
Europe

316

308

Ber

C
Holiday
Europe

Clive

304

310

Eric

318

D Holiday
Fish Spain

Dan

320

322

G
Squid

E
Holiday
Spain

## Figure 3

402
404
406

Cat
Pet
Squid

408
Home

410
Europe

412

400

Holiday

414
Fish

416
Spain

**Figure 4**

404    406

402

Cat        Pet        Squid

408

Home
0 5

409

411

0 4        412

410

Europe        Holiday        415

413        0 5        0 8

414

0 66

Fish        417        Spain    416

400

**Figure 5**

14

600

Figure 6

700

Figure 7

Figure 8

900

416

416

~802

~804

~806

economic

~808

city 0 25

0 25

0 25

travel

402

0.1 = 0 + 0.1

0.6 = 0.5 + 0.1

Europe 410

London

Cat 0.1

0.1

408

0.6 = 0.5 + 0.1

0.1

0.5

Home

~412

~406

0.1

0.1

0.1

0.1

404

Holiday

0.1 Squid

Pet

0.6 0.9 0.1

~414

0.76

416

Fish

Spain

**Figure 9**

1002

Users tag files with keywords

1004

Build weighted tag network based on tag co-location in files and tag authorship

1006

User inputs a query term(s) for a search query

1010

Perform standard keyword search using input query term(s)

1008

Expanded query term search?

**No** ← → **Yes**

1018

Generate expanded set of query terms based on input query term(s) using weighted tag network

1012

Return set of matching files

1020

Use expanded set of query terms to perform search and return set of matching files

1014

Use weighted tag network to rank returned set of matching files

1026

Use weighted tag network to rank returned set of matching files

1022

Ranked search results?

**Yes** ←

**No**

1016

Output set of ranked matching files as search results

1028

Output set of ranked matching files as search results, where query term used has been expanded

1024

Output set of matching files as search results, where query term used has been expanded

**Figure 10**

Europäisches
Patentamt

European
Patent Office

Office européen
des brevets

# EUROPEAN SEARCH REPORT

Application Number

EP 08 25 3792

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHENKEL R ET AL: "Efficient top-k querying over social-tagging networks" PROCEEDINGS - ACM SIGIR 2008 - 31ST ANNUAL INTERNATIONAL ACM SIGIR CONFERENCE ON RESEARCH AND DEVELOPMENT IN INFORMATION RETRIEVAL, JULY 20 - 24, 2008, SINGAPORE, SINGAPORE, [Online] 24 July 2008 (2008-07-24), pages 523-530, XP002539080 Retrieved from the Internet: URL:http://doi:10.1145/1390334.1390424> [retrieved on 2009-07-28] * figure 1 * * page 525, left-hand column - page 526, right-hand column, paragraph 1 * * page 526 * ----- | 1-5 | INV. G06F17/30 |
| X | MATTHIAS BENDER ET AL: "Exploiting social relations for query expansion and result ranking" DATA ENGINEERING WORKSHOP, 2008. ICDEW 2008. IEEE 24TH INTERNATIONAL CONFERENCE ON, IEEE, PISCATAWAY, NJ, USA, 7 April 2008 (2008-04-07), pages 501-506, XP031246673 ISBN: 978-1-4244-2161-9 * figure 1 * * page 502, right-hand column - page 504, left-hand column * ----- -/-- | 1-5 | |

TECHNICAL FIELDS
SEARCHED (IPC)

G06F

The present search report has been drawn up for all claims

| Place of search | Date of completion of the search | Examiner |
|---|---|---|
| Munich | 28 July 2009 | Michalski, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 08 25 3792

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAO S ET AL: "Optimizing web search using social annotations" PROCEEDINGS OF THE 16TH INTERNATIONAL WORLD WIDE WEB CONFERENCE, WWW2007 - 16TH INTERNATIONAL WORLD WIDE WEB CONFERENCE, WWW2007, MAY 8-12, 2007, BANFF, ALBERTA, CANADA, [Online] 12 May 2007 (2007-05-12), pages 501-510, XP002539081 Retrieved from the Internet: URL:http://www2007.org/papers/paper397.pdf > [retrieved on 2009-07-28] * figures 1,2 * * page 503, left-hand column - page 504, right-hand column * ----- | 1-5 | |

TECHNICAL FIELDS
SEARCHED     (IPC)

The present search report has been drawn up for all claims

| Place of search | Date of completion of the search | Examiner |
|---|---|---|
| Munich | 28 July 2009 | Michalski, Stéphane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 2 192 503 A1**

**Non-patent literature cited in the description**

- **M.J. Muller et al.** Tag-Based Metonymic Search in an Activity-Centric Aggregation Service. *ECSCW'07: Proceedings of the Tenth Conference on Computer Supported Cooperative Work,* 24 September 2007

- **C. M. Au Yeung et al.** Web Search Disambiguation by Collaborative Tagging. *Workshop on Exploring Semantic Annotations in Information Retrieval,* 30 March 2008
- Knowledge Sharing on the Semantic Web. **Kings, N. J. ; Gale, C. ; Davies, J.** European Semantic Web Conference (ESWC) 2007. Springer-Verlag, 2007, 4519